# EUROPEAN PATENT APPLICATION

(11) **EP 1 847 821 A1**
(43) Date of publication of application: **24.10.2007**
(21) Application number: 07251637.0
(22) Date of filing: 18.04.2007
(51) Int. Cl.: G01J 5/04, G08B 13/19

(54) **A passive infrared detector with al least one internally adjustable pyro sensor**

(30) Priority: 20.04.2006 MY 0661809
(71) Applicant: IQ Group SDN BHD, Fasa 1(FTZ) Bayan Lepas, 11900 Penang (MY)
(72) Inventor: Chen, Wen Chin, Bayan Lepas 11900 Pulau Pinang (MY); Yeoh, Keat Hock, 11900 Bayan Lepas Pulau Pinang (MY)
(74) Representative: Gambell, Derek

(57) **Abstract**

A passive infrared detector (100) comprises an arc lens assembly (20), a control module (30) carrying at least one internal pyro sensor (31) and electrical circuitry, and a module cover (40). According to the invention, each individual pyro sensor (31) can be adjusted by rotation efficiently from outside. The module cover (40) is equipped with at least one adjustment knob (42) which is accessible from the outside and connectable to the pyro sensor (31). The pyro sensor (31) is mounted onto the pyro sensor module (32). The pyro sensor (31), with a focusing axis which is perpendicular to its planar surface, is made to face selected layers of lenses on the arc lens assembly (20). The pyro sensor (31) is rotatable about a rotation axis (60) which is permanently disposed relative to the control module (30). An external turning force applied to the adjustment knob (42) is converted by an actuation mechanism to tilt or rotate the pyro sensor (31) about this rotation axis (60). The focusing axis of the pyro sensor (31) selectively and rotatably faces selected layers of lenses on the arc lens assembly (20) with this external turning force.

The present invention discloses three preferred embodiments of the above actuation mechanism.

## Description

### TECHNICAL FIELD

The present invention relates generally to the detection range control of a passive infrared detector and specifically to a passive infrared detector with at least one internally adjustable pyro sensor.

### BACKGROUND ART

A prior art passive infrared (PIR) detector essentially comprises an arc lens assembly, a control module and a module cover. At least one pyro sensor will be mounted or affixed to the control module to extend the field of view. Perpendicular to the surface plane of the pyro sensor, there is an imaginary centerline from the pyro sensor, which is called here below as a focusing axis.

An arc lens is made up of high-density polyethylene (HDPE) polymeric material. Optical focal points can be designed onto the lenses in Fresnel or dotted configuration. Commercially, this arc lens assembly will constitute layers of these lenses. Those layers towards the top receive an object's emitted infrared rays from the far range. Those layers towards the bottom receive an object's emitted infrared rays from the near range. The centerline of the pyro sensor, which is perpendicular to its surface plane, can be considered as the focusing axis. Each pyro sensor is limited by its technical specification to receive infrared rays within a predetermined range vertically and horizontally, measured from its focusing axis. These horizontal and vertical ranges, coupled with the layers of arc lenses on the arc lens assembly, define the angle of detection and the range or distance of detection of the detector.

The main disadvantage of prior art PIR detectors is that the arc lens assembly and the pyro sensors are substantially stationary and permanently disposed. To vary and extend the detection range, more than one pyro sensors are employed and they are disposed around the periphery of the control module. It is important to note that each of these pyro-sensors is fixed and stationary in its detection view.

An easy prior art way to deal with the above problem of fixed and stationary detection view is to install more than one pyro sensor around the periphery of the control module. Once these pyro sensors are installed, the detection views are more or less fixed. So, in order to vary the detection view, the entire detector has to be tilted or moved. The detection range control of prior art pyro sensors can also be achieved by means of amplification or reduction of electronic gain. A prior art passive infrared detector with movable pyro-sensors is commercially available. Each pyro sensor is internally sandwiched between two vertical springs. To move vertically up and down, one vertical spring is accessible to an outside actuation means. During the movement of the detector, these springs can easily be displaced and dislocated. The internal adjustment of the pyro sensor becomes inefficient.

### SUMMARY OF THE INVENTION

The present invention has therefore as an object to improve the detection range control of passive infrared detectors equipped with internal pyro sensors, so that each individual pyro sensor can be internally adjusted by rotation with the assistance from an outside turning force.

According to the invention, a passive infrared (PIR) detector comprises an arc lens assembly, a control module carrying at least one pyro sensor and electrical circuitry, and a module cover. The above object is achieved in that the module cover is equipped with at least one adjustment knob which is accessible from the outside and connectable to the pyro sensor. The pyro sensor is mounted onto the pyro sensor module. The pyro sensor, with a focusing axis perpendicular to its planar surface, is made to face selected layers of lenses on the arc lens assembly. The pyro sensor is rotatable about a rotation axis parallel to the surface plane of the pyro sensor. The turning action applied to the adjustment knob is converted by an actuation mechanism to tilt or rotate the pyro sensor about the rotation axis. Thus, the focusing axis of the pyro sensor selectively and rotatably faces relevant portions of the arc lens assembly with the assistance of the external turning force.

The present invention discloses three preferred embodiments of the above actuation mechanism.

### BRIEF DESCRIPTION OF THE DRAWINGS

The present invention will be described in more detail, by way of example, with reference to the following drawings:
Figure 1a shows a perspective view of a ceiling-mounted passive infrared detector.
Figure 1b shows an inside view of the detector as shown in Figure 1a, by detaching an arc lens assembly and exposing a first preferred embodiment of an actuation mechanism in accordance with the present invention.
Figure 1c shows a cross-section view of the actuation mechanism as shown in Figure 1b, with a focusing axis of a pyro sensor horizontally pointing relative to the arc lens assembly.
Figure 1d shows a cross-section view of the actuation mechanism as shown in Figure 1b, with the focusing axis of a pyro sensor inclinedly pointing relative to the arc lens assembly.
Figure 2a shows an inside view of another detector, by detaching an arc lens assembly and exposing a second preferred embodiment of an actuation mechanism in accordance with the present invention.
Figure 2b shows a perspective view of the actuation mechanism as shown in Figure 2a.
Figure 2c shows a side view of the actuation mechanism as shown in Figure 2b and a pyro sensor with focusing axis substantially pointing horizontally relative to the arc lens assembly.
Figure 2d shows a side view of the actuation mechanism as shown in Figure 2b and a pyro sensor with focusing axis inclinedly pointing relative to the arc lens assembly.
Figure 3a shows a perspective view of a wall-mounted passive infrared detector.
Figure 3b shows an inside view of the detector as shown in Figure 3a, by detaching an arc lens assembly and exposing a third preferred embodiment of an actuation mechanism in accordance with the present invention.
Figure 3c shows a perspective view of the actuation mechanism as shown in Figure 3b.
Figure 3d shows a partial cross-section view of the actuation mechanism as shown in Figure 3c and a pyro sensor with focusing axis substantially pointing horizontally relative to the arc lens assembly.
Figure 3e shows a partial cross-section view of the actuation mechanism as shown in Figure 3c and a pyro sensor with focusing axis inclinedly pointing relative to the arc lens assembly.

### DETAILED DESCRIPTION

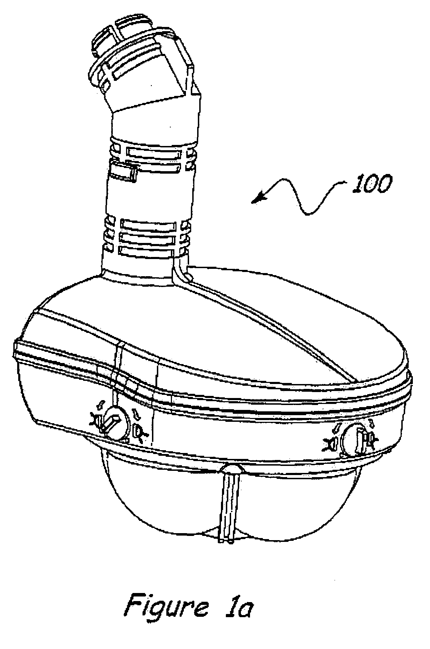

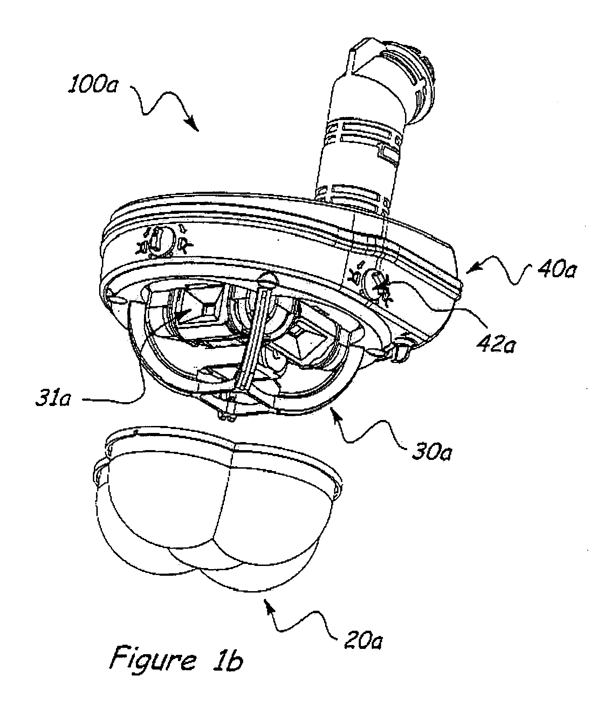

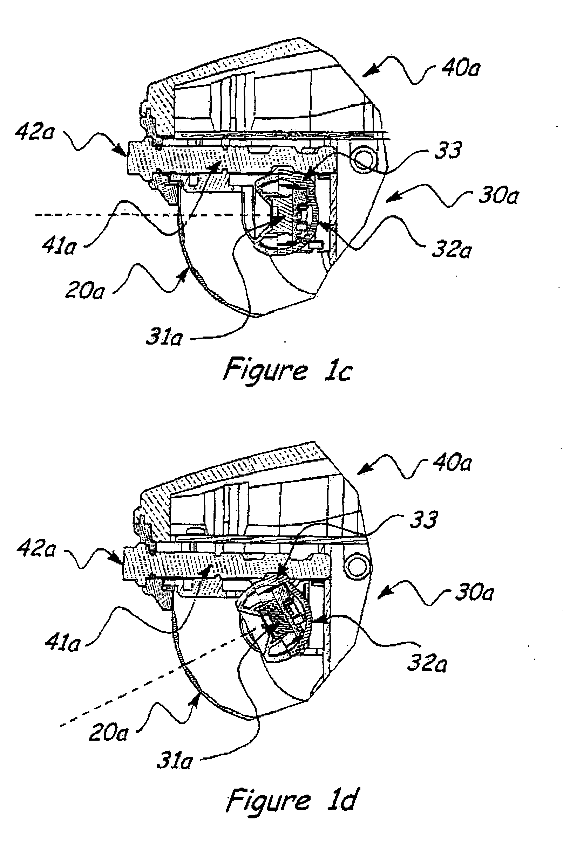

All Figures 1a to 1d, 2a to 2d and 3a to 3e disclose a common feature of the present invention. A passive infrared detector (100) comprises an arc lens assembly (20), a control module (30) carrying at least one pyro sensor (31) and electrical circuitry, and a module cover (40). The module cover (40) is equipped with at least one adjustment knob (42) which is accessible from the outside and connectable physically to each pyro sensor (31). The pyro sensor (31) is mounted onto the pyro sensor module (32). The centre line of the pyro sensor (31), which is perpendicular to its planar surface, is defined as the focusing axis. The surface plane of the pyro sensor (31) faces selected layers of lenses on the arc lens assembly (20). The pyro sensor (31) is rotatable about a rotation axis (60) parallel to the surface plane of the pyro sensor (31). In the three embodiments disclosed, the rotation axis is not the same axis. An external turning force applied to the adjustment knob (42) is converted by an actuation mechanism to tilt or rotate the pyro sensor (31) about a rotation axis (60). The focusing axis of the pyro sensor (31) selectively and rotatably is made to face selected portions of the arc lens assembly (20) with the external turning force.

According to the teaching of the present invention, there are three preferred embodiments of the actuation mechanism. Like numerals will be used to denote like components in the three embodiments. To show individual differences and specific references, suffices "a", "b" and "c" are added respectively after the numerals.

A first preferred embodiment of the actuation mechanism is explained with reference to Figures 1a to 1d. An adjustment knob (42a) takes the form of an elongated spiral gear (41a) engaging a cylindrical pyro sensor module (32a). A protrusion (33) is provided on the circumference of the cylindrical pyro sensor module (32a). The axial axis of the cylindrical pyro sensor module (32a) serves as the rotation axis (not shown). A pyro sensor (31 a) is physically disposed inside the pyro sensor module (32a). Its focusing axis, perpendicular to the surface plane of the pyro sensor (31 a), faces relevant layers of the arc lens assembly (20a). The pyro sensor module (32a) together with the pyro sensor (31a) is rotatable about the rotation axis parallel to the surface of the pyro sensor (31a).

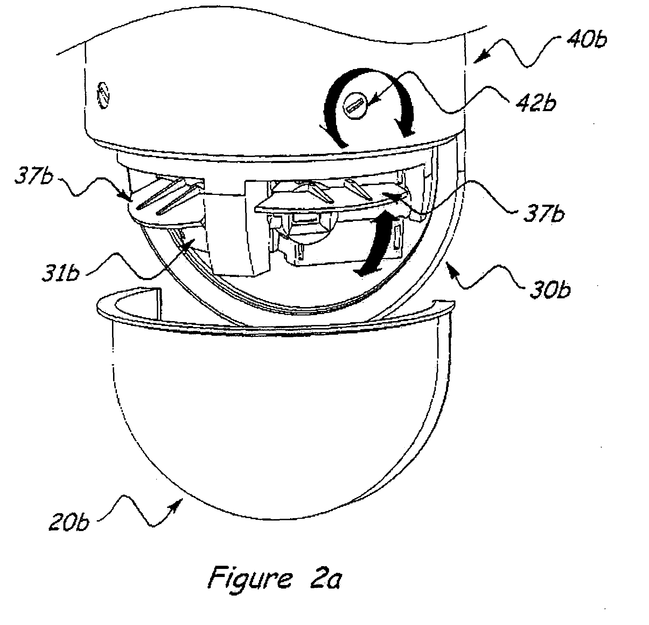

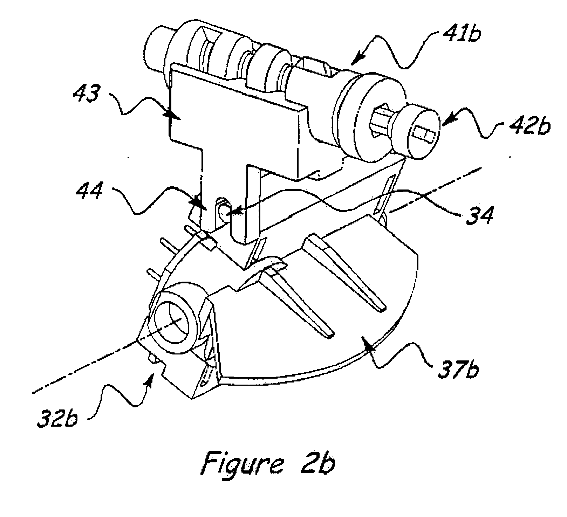

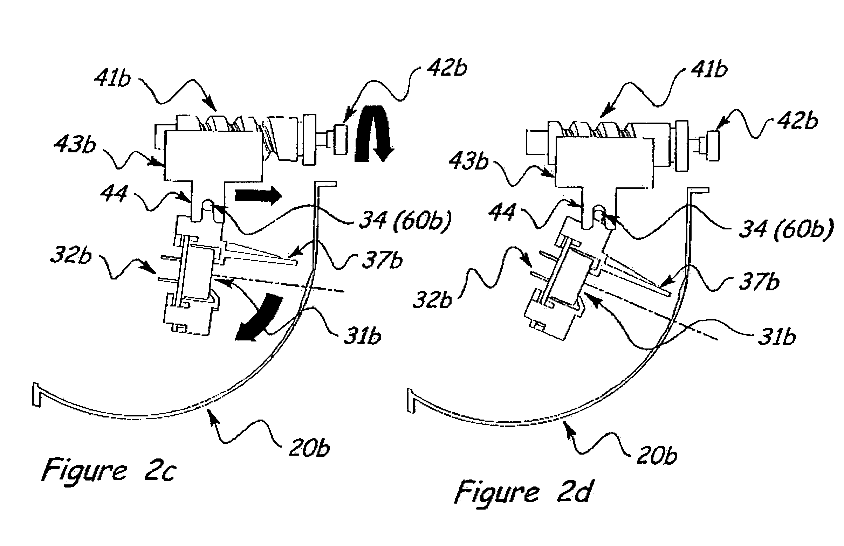

A second preferred embodiment of the actuation mechanism is explained with reference to Figures 2a to 2d. An adjustment knob (42b) takes the form of an elongated spiral gear (41b). The adjustment knob (42b) is accessible from the outside and engages a slider urging block (43) with a U-shaped protrusion (44) underneath the slider urging block (43). As the adjustment knob (42b) turns, the slider urging block (43) moves along the length of the spiral gear (41b). The U-shaped cavity therein the U-shaped protrusion (44) receives and engages an elongated boss (34) of a pyro sensor module (32b) placed underneath the slider urging block (43). A pyro sensor (31b) is physically disposed onto the pyro sensor module (32b) with its centre line perpendicular to its surface plane, called the focusing axis. This focusing axis of the pyro sensor (31b), perpendicular to its surface plane, faces relevant portion of an arc lens assembly (20b).

The elongated boss (34) is disposed at the top surface of the pyro sensor module (32b) to engage the cavity defined in the U-shaped protrusion (44). As the slider urging block (43) moves linearly, the elongated boss (34) tilts or rotates the pyro sensor module (32b). In this sense, the elongated boss (34) acts as a rotation axis (60b). The pyro sensor module (32b) is tiltable or rotatable about this tilting or rotation axis (60b). This tilting or rotation axis (60b) is more or less fixed in position. In short, the external turning force is converted with the assistance of the slider urging block (43) to tilt or rotate the pyro sensor module (32b) about the rotation axis (60b).

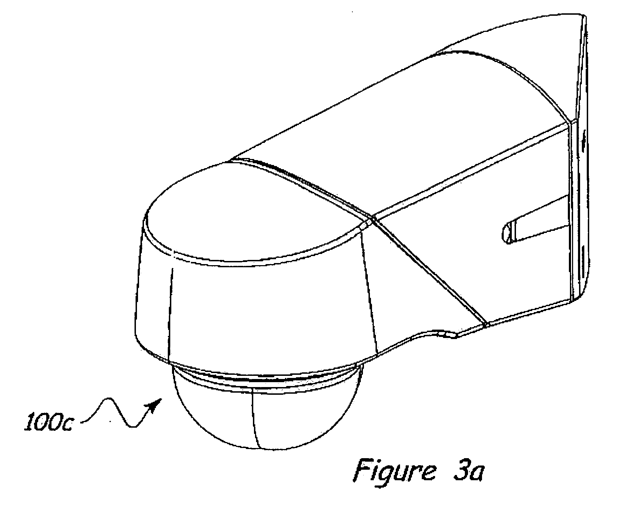

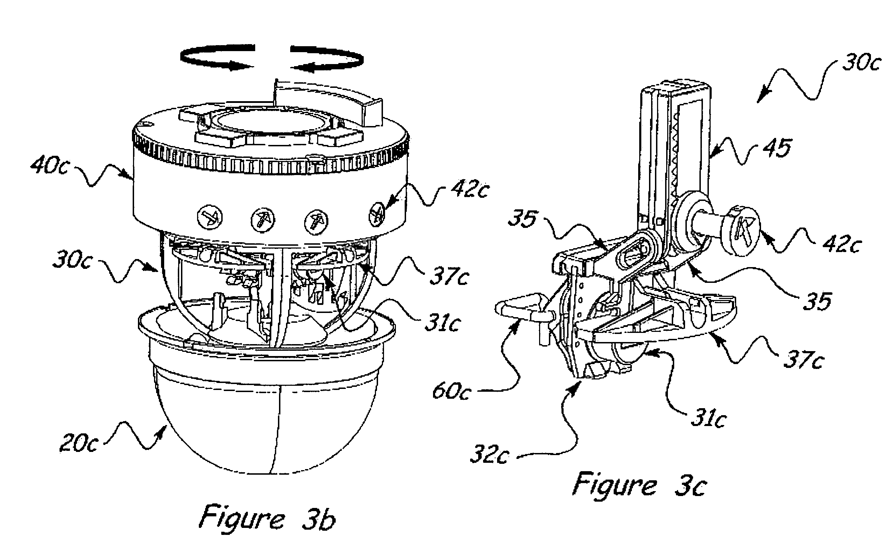

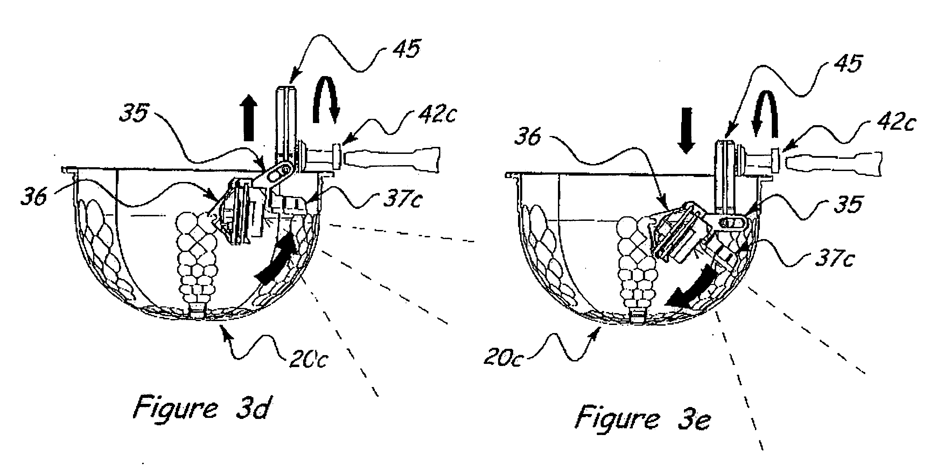

A third preferred embodiment of the actuation mechanism is explained with reference to Figures 3a to 3e. An adjustment knob (42c) takes the form of a short axially serrated bolt. The adjustment knob (42c) is affixed to and protrudes through the module cover (40c). Next, the adjustment knob (42c) engages internally a U-shaped linear mover device (45). The inside of both parallel arms of the U-shaped linear mover device (45) are likewise serrated and receive the serrated adjustment knob (42c) in between. An external turning force is applied to the adjustment knob (42c). As the adjustment knob (42c) turns, the linear mover device (45) moves linearly. The open ends of the U-shaped linear mover device (45) also engage two extended arms (35) of a pyro sensor module (32c) and are, in turn, movable when the linear mover device (45) moves. A pyro sensor (31c) is mounted onto the pyro sensor module (32c). The surface plane of the pyro sensor (31c) faces relevant portions of the arc lens assembly (20c).

The pyro sensor module (32c) is provided with the pyro sensor (31c) on its front side facing the arc lens assembly (20c) and a U-shaped hinge protrusion (36) at its back. The hinge protrusion (36) of the pyro sensor module (32c) engages a tiltable or rotation axis (60c) parallel to the surface plane of the pyro sensor (31c). In short, the external turning force turns the serrated adjustment knob (42c), the serrated adjustment knob (42c) moves the linear mover device (45) linearly, the linear mover device (45) urges the extended arms (35) of the pyro sensor module (32c). The pyro sensor (31c), mounted on the pyro sensor module (32c), tilts or rotates about the tiltable or rotation axis (60c). In the third embodiment, since there are three actuation mechanisms, there will be three rotation axes (60c). In Figure 3c, these three rotation axes (60c) are combined to form a U-ring which is permanently disposed relative to the control module (30c).

In all the above embodiments, particularly the second and the third embodiments, a winged protrusion (37b, 37c), perpendicular to the surface plane of the pyro sensor (31b, 31c), is provided towards the top side of the pyro sensor module (32b, 32c). Infrared rays above the detector (100b, 100c) will be curtailed or blocked from reaching the pyro sensor (31 b, 31 c). For an example, a bird that flies above the detector (100b, 100c) will not trigger detection.

## Claims

1. A passive infrared detector (100) comprising an arc lens assembly (20), a control module (30) carrying at least one pyro sensor (31) and electrical circuitry, and a module cover (40) is **characterised in** which
the module cover (40) is equipped with at least one adjustment knob (42) which is accessible from the outside and connectable to the pyro sensor (31);
the pyro sensor (31) is mounted onto a pyro sensor module (32) provided in the control module (30);
the pyro sensor (31) is rotatable about a rotation axis (60) parallel to the surface plane of the pyro-sensor (31) which is permanently disposed relative to the control module (30);
an external turning force applied to the adjustment knob (42) is converted by an actuation mechanism to tilt or rotate the pyro sensor (31) about the rotation axis (60),
whereby center line of pyro sensor (31) perpendicular to its planar surface, also called the focusing axis, is selectively and rotatably made to face selected layers of lenses on the arc lens assembly (20) with the application of the external turning force.

2. An actuation mechanism in a passive infrared detector (100a) equipped with at least one internally adjustable pyro sensor (3 1 a) as in Claim 1 in which
the adjustment knob (42a) takes the form of a spiral gear (41a) engaging a cylindrical pyro sensor module (32a);
one pyro sensor (31a) is disposed inside the pyro sensor module (32a), and
the axial axis of the cylindrical pyro sensor module (32a) acts as a rotation axis (not shown);
whereby the cylindrical pyro sensor module (32a) together with the pyro sensor (31a) is rotatable about the rotation axis.

3. An actuation mechanism in a passive infrared detector (100b) equipped with at least one internally adjustable pyro sensor (31b) as in Claim 1 in which
the adjustment knob (42b) takes the form of an elongated spiral gear (41b) engages and moves a slider urging block (43) linearly;
the slider urging block (43) is provided with a U-shaped protrusion (44) underneath;
the U-shaped protrusion (44) in turn engages an elongated boss (34) which is disposed at the top surface of the pyro sensor module (32b);
the elongated boss (34) acts as the rotation axis (60b) for the pyro sensor module (32b); and
the pyro sensor (31b) is mounted onto the pyro sensor module (32b),
whereby the external turning force is converted with the assistance of the slider urging block (43) to tilt or rotate the pyro sensor module (32b) about the rotation axis (60b).

4. An actuation mechanism in a passive infrared detector (100c) equipped with at least one internally adjustable pyro sensor (31c) as in Claim 1 in which
an adjustment knob (42c), in the form of a short axially serrated bolt, is affixed to and protrudes through the module cover (40c);
the adjustment knob (42c) engages a U-shaped linear mover device (45);
the inside of two parallel arms of the U-shaped linear mover device (45) are likewise serrated and receive the adjustment knob (42c) in between;
the open ends of the U-shaped linear mover device (45) engage two extended arms (35) of a pyro sensor module (32c) and are in turn movable;
a pyro sensor (31c) is mounted onto the front side of the pyro sensor module (32c);
a U-shaped hinge protrusion (36) is provided on the back side of the pyro sensor module (32c); and
the U-shaped hinge protrusion (36) of the pyro sensor module (32c) engages a rotation axis (60c) which is permanently disposed relative to the control module (30c),
whereby an external turning force turns the adjustment knob (42c), the adjustment knob (42c) moves the linear mover device (45) linearly, the linear mover device (45) urges the extended arms (35) of the pyro sensor module (32c), and the pyro sensor (31c) mounted onto the pyro sensor module (32c) tilts or rotates about the rotation axis (60c).

5. An actuation mechanism in a passive infrared detector (100b, 100c) equipped with at least one internally adjustable pyro sensor (31b, 31c) as in Claim 3 or 4 in which a winged protrusion (37b, 37c), perpendicular to the surface plane of the pyro sensor (31b, 31c) is provided towards the top side of the pyro sensor module (32b, 32c), whereby infrared rays from above the detector (100b, 100c) are curtailed or blocked from reaching the pyro sensor (31b, 31c).
